Europäisches Patentamt

European Patent Office

Office européen des brevets

(11) Publication number: **0 118 418**
**B1**

# EUROPEAN PATENT SPECIFICATION

(45) Date of publication of patent specification: **15.06.88**

(51) Int. Cl.⁴: **H 02 J 3/01, H 02 J 3/18**

(21) Application number: **82902644.2**

(22) Date of filing: **06.09.82**

(86) International application number:
**PCT/HU82/00042**

(87) International publication number:
**WO 84/01059 15.03.84 Gazette 84/07**

(54) **CIRCUIT ARRANGEMENT FOR COMPENSATION OF FAST CHANGING REACTIVE POWER, IN PARTICULAR ON THE POINT OF CONSUMERS, WHICH GENERATE HARMONICS.**

(43) Date of publication of application:
**19.09.84 Bulletin 84/38**

(45) Publication of the grant of the patent:
**15.06.88 Bulletin 88/24**

(84) Designated Contracting States:
**CH DE FR GB LI SE**

(56) References cited:
**EP-A-0 046 221**
**AT-B- 231 580**
**DE-A-1 563 280**
**DE-B-2 357 209**
**FR-A-1 198 492**
**SU-A- 399 962**

(73) Proprietor: **BUDAPESTI MÜSZAKI EGYETEM
3/9, Müegyetem rakpart
H-1111 Budapest XI (HU)**

(72) Inventor: **GESZTI, P., Ottó
Jagelló ut 13
H-Budapest XII (HU)**
Inventor: **DAN, András
Budakeszi ut 17
H-Budapest II (HU)**
Inventor: **KISVÖLCSEY, Jenó
Szamóca ut 2
H-Budapest XII (HU)**

(74) Representative: **Lehn, Werner, Dipl.-Ing. et al
Hoffmann, Eitle & Partner Patentanwälte
Arabellastrasse 4
D-8000 München 81 (DE)**

Courier Press, Leamington Spa, England.

## Description

The invention relates to a circuit arrangement for compensating fast changing reactive power, in particular on connect points of non-linear consumers, i.e. consumers generating upper harmonics.

There are known different circuit arrangements capable of compensating fast changing reactive power, however, these circuit arrangements in their present form are not suitable for compensation in case of non-linear consumers, generating harmonics, therefore the arrangement should in every case include harmonic filters.

As an example of this solution it can be mentioned a switchable capacitor bank, however, in this case the capacitor bank with a changing capacity and the supply network may form a parallel resonant circuit at frequency values, to which none of the harmonic filters is tuned, resulting in undesired voltage-distortions and overheating of the frequency-sensitive consumers etc. Accordingly, this solution is not used in the case of consumers generating harmonics.

Another solution is represented by the application of shunt-reactor switched via phase-angle controlled thyristors. In this case, however, the control produces further harmonics, not occurring earlier, which have to be also suppressed.

A synchron-compensator can be also used for compensating the changing reactive power, however, it operates slower than the arrangements comprising thyristor.

The common drawback of the solutions mentioned above lies in that in addition to the harmonic filters expensive equipment with large space requirements are needed, as therefore the compensation of the fast changing reactive power is realized only by means of very expensive investments. As a consequence, compensation of the reactive power of smaller industrial manufacturers is not solved, leading to high losses in the network besides, in radial network undesired voltage fluctuations may occur.

The increased loss in the network can be compensated only by the power plants requiring in this way further investments. Hence, if reduction becomes possible, a considerable capacity in the power plants can be released. Fluctuation of the network voltage results in undesired phenomena (such as flicker) at the communal low-voltage consumers. To avoid it, fast control of the reactive power has been proposed.

The aim of the invention is to use for the fast control of the reactive power the harmonic filters (i.e. resonant circuits tuned to the frequency of the harmonics) applied with the consumers generating harmonics.

Although, by changing the condensers of the filters the control of the reactive power becomes possible, however, simultaneously the resonance-frequency and efficiency of the filtering also alter. Accordingly, a circuit arrangement is required, which is capable of changing fast the fundamental harmonic reactive power of the harmonic filters, while the resonance frequency thereof remains unchanged.

In accordance with the invention the aim can be achieved in such a manner that the harmonic filters — which exhibit capacitive character at the network frequency — are connected via a transformer with changeable voltage ratio to that point of the network, where changing of the reactive power is required. When changing the voltage ratio, the impedance of the filters coupled to the primary side and thus the capacity to be measured on the network frequency is altering but without the change of the value of the resonance frequency. In order to be able to control fast the reactive power, it seems to be expedient to switchover the taps of the control transformer by means of semiconductor elements, advantageously a thyristor or a triac.

The invetnion will be described in detail on the basis of a preferred embodiment, shown by way of example with reference to the accompanying drawing, wherein

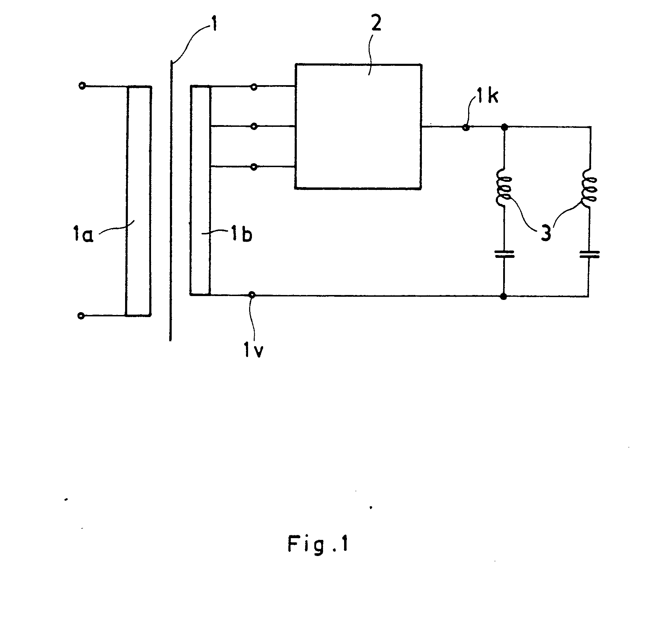

FIG. 1 shows the circuit arrangement according to the invention.

In the proposed circuit arrangement (Fig. 1) comprises a transformer 1 with a primary coil 1a and a secondary coil 1b, an on-load-tap-changer-unit 2 with output point 1k and one or more harmonic filters 3. The secondary coil 1b has taps and an end-point 1v.

The on-load-tap-changer-unit 2 is connected to respective taps of the secondary coil 1b of the transformer 1 of variable voltage ratio; between the output point 1k and the end-point 1v of the secondary coil 1b one or more harmonic filters 3 are connected the voltage of which is controlled by the on-load-tap-changer-unit 2, whereby the fundamental harmonic reactive power of the harmonic filters 3 measured at the periphery coil 1a can be varied.

The harmonic filter 3 serves to filtering the harmonic voltage in the network and the series oscillators tuned with harmonics to be filtered are connected to the output point 1k and the end-point 1v.

In case of a three-phase transformer the circuit arrangement is to be applied in all the three phases, accordingly, control of the reactive power becomes possible for each phases separately and together.

The circuit arrangement according to the invention can be provided with an equipment for the automatic control, promoting the application of the compensation of the fast changing reactive power in practice.

The application of the circuit arrangement according to the invention results in considerable savings of investment costs in case of the large industrial power consumers and in the case of smaller manufacturers, giving the possibility of fast compensating the reactive power, energy can be saved and the quality of the voltage can be considerably improved.

## Claim

Circuit arrangement for compensating fast changing reactive power, in particular on connection points of consumers generating harmonics, comprising: a transformer (1) with variable voltage ratio having a primary coil (1a) and a secondary coil (1b) with taps to be switched over and with an end point (1v); an on-load-tap-changer-unit (2) for switching over the taps; and harmonic filter means (3), tuned to a predetermined frequency, characterised in that the harmonic filter means (3) are connected between an output point (1k) of the on-load-tap-changer-unit (2) and the end point (1v) of the secondary coil (1b) of the transformer (1), whereby the impedance of said filter means (3) appearing in parallel with said primary coil (1a) may be changed without changing said predetermined frequency.

## Patentanspruch

Schaltungsanordnung zum Ausgleich von schnell wechselnder reaktiver Leistung, insbesondere an Verbindungspunkten von Oberschwingungen erzeugenden Verbrauchern, mit einem Wandler (1) mit variablem Spannungsverhältnis enthaltend eine Primärspule (1a) und eine Sekundärspule (1b) mit umzuschaltenden Abgriffen und mit einem Endpunkt (1v), einer Last-Stufenschaltereinheit (2) zum Umschalten der Abgriffe, und Oberschwingungsfiltermitteln (3), die auf eine vorbestimmte Frequenz abgestimmt sind, dadurch gekennzeichnet, daß die Oberschwingungsfiltermittel (3) zwischen einem Ausgangspunkt (1k) der Last-Stufenschaltereinheit (2) und dem Endpunkt (1v) der Sekundärspule (1b) des Wandlers (1) angeschlossen sind, wodurch die Impedanz der Filtermittel (3), die parallel zur Primärspule (1a) wirken, ohne Änderung der vorbestimmten Frequenz geändert werden kann.

## Revendication

Agencement de circuit pour compenser une puissance réactive à variation rapide, en particulier aux points de connexion de récepteur produisant des harmoniques, comportant: un transformateur (1) avec un rapport de tension variable, comprenant un enroulement primaire (1a) et un enroulement secondaire (1b) avec des prises de connexion fixes qu'il faut commuter et avec un point terminal (1v); un groupe commutateur de prise de connexion en charge (2) pour commuter les prises de connexion fixes; et des moyens (3) formant filtres harmoniques, accordés sur une fréquence prédéterminée, caractérisé en ce que les moyens (3) formant filtres harmoniques sont reliés entre un point de sortie (1k) du groupe commutateur de prises de connexion en charge (2) et le point terminal (1v) de l'enroulement secondaire (1b) du transformateur (1), ce qui permet de modifier l'impédance desdits moyens (3) formant filtres installés en parallèle avec ledit enroulement primaire (1a) sans modifier ladite fréquence prédéterminée.

Fig.1

1